# EUROPÄISCHE PATENTANMELDUNG

(11) **EP 0 858 118 A2**
(43) Veröffentlichungstag der Anmeldung: **12.08.1998**
(21) Anmeldenummer: 98101509.2
(22) Anmeldetag: 29.01.1998
(51) Int. Cl.: H01M 10/12

(54) **Bleiakkumulator, insbesondere Starterbatterie für Kraftfahrzeuge**

(30) Priorität: 10.02.1997 DE 29702203 U
(71) Anmelder: VB Autobatterie GmbH, D-30419 Hannover (DE)
(72) Erfinder: Richter, Gerolf, Dr., 31139 Hildesheim (DE); Salamon, Klaus, Dr., 60598 Frankfurt (DE)
(74) Vertreter: Kaiser, Dieter Ralf, Dipl.-Ing.

(57) **Zusammenfassung**

Bei einem Bleiakkumulator, insbesondere einer Starterbatterie für Kraftfahrzeuge, mit mehreren, in einem gemeinsamen Blockkasten angeordneten elektrisch in Reihe geschalteten Einzelzellen, enthält der Blockkasten neun Einzelzellen, und die positiven und negativen Elektrodenplatten in den Einzelzellen besitzen ein Verhältnis von Höhe zu Breite von 0,3 bis 0,6. Zwei hintereinandergeschaltete Akkumulatoren dieses Aufbaus können als Starterbatterie in einem Kraftfahrzeug verwendet werden.

## Beschreibung

Starterbatterien für Kraftfahrzeuge besitzen üblicherweise sechs in einem gemeinsamen Blockkasten angeordnete Zellen und sind für eine Spannungsversorgung eines 12 V-Stromkreises ausgelegt. Da in Kraftfahrzeugen eine immer größere Anzahl von elektrischen Verbrauchern beispielsweise in Form von Motoren für Fensterhebvorrichtungen und dergleichen verwendet werden und wegen der fließenden hohen Ströme verhältnismäßig große Kupferquerschnitte verlegt werden müssen, besteht die Tendenz, die Spannung des Bordnetzes zu erhöhen.

Bei großen Verbrennungskraftmaschinen wie in Lastkraftwagen oder Bussen werden daher zwei konventionelle 12 V-Akkumulatoren parallelgeschaltet, um ein 24 V-Bordnetz zu erhalten.

Der Erfindung liegt die Aufgabe zugrunde, eine Starterbatterie anzugeben, die insbesondere zur Verwendung in einem Kraftfahrzeug mit einem Bordnetz höherer Spannung geeignet ist.

Diese Aufgabe wird erfindungsgemäß bei einem Bleiakkumulator gemäß dem Oberbegriff des Anspruchs 1 durch die im kennzeichnenden Teil dieses Anspruchs angegebenen Merkmale gelöst. In den Unteransprüchen sind vorteilhatte Ausgestaltungen eines solches Bleiakkumulators angegeben.

Erfindungsgemäß besitzt der Bleiakkumulator neun elektrisch in Reihe geschaltete Zellen, die in einem Blockkasten untergebracht sind. Dies entspricht einer Batterie mit einer Spannung von ca. 18 V. Eine solche Batterie besitzt eine geringere Kapazität als übliche Starterbatterien, so daß erfindungsgemäß das Verhältnis von Höhe zu Breite der Elektrodenplatten in einem Bereich von 0,4 bis 0,6 ausgewählt wird. Damit wird das Verhältnis der ungenutzten Außenseiten der Endplatten jeder Zelle zu der Gesamtfläche aller Elektrodenplatten einer Zelle verbessert. Darüber hinaus sind Elektrodenplatten mit einer solchen Ausgestaltung, d.h. Elektrodenplatten, bei denen das Verhältnis Höhe zu Breite wesentlich kleiner als 1 ist, hinsichtlich des effektiven Widerstandes der Elektrodenplatten deutlich besser als Elektrodenplatten mit den Abmessungen konventioneller Starterbatterien.

Vorzugsweise liegt das Höhe- Breiteverhältnis bei ca. 0,45 bis 0,55, insbesondere bei etwa 0,5. Die Höhe der Platten liegt dabei zwischen 80 mm und 50 mm, vorzugsweise bei etwa 70 mm.

Erfindungsgemäß werden zwei dieser neunzelligen 18 V-Batterien im Fahrzeug zu einer 36 V- Batterie zusammengeschaltet, so daß im Hinblick auf die notwendige Ladeüberspannung ein 42 V-Bordnetz entsteht. Durch die Verwendung zweier erfindungsgemäßer Batterien, die eine besonders geringe Bauhöhe besitzen, ist eine leichte Unterbringung im Fahrzeug möglich.

Die Realisierung eines Bordnetzes mit einer 3fach höheren Nutzspannung führt zu einer drastischen Reduzierung der Übergangswiderstände. Darüberhinaus gestattet die erfindungsgemäße Verwendung von zwei parallelgeschalteten neunzelligen Batterien eine Erhöhung der Zuverlässigkeit des Gesamtsystems.

Es ist möglich, bei den miteinander verschalteten Batterien eine gegenseitige Prüfung der Akkumulatoren durch Aufprägung von Lade- und Entladebelastungen vorzunehmen, ohne daß dabei ein deutlich erhöhter Energieverbrauch der Akkumulatoren auftritt.

Einem der Akkumulatoren wird elektrische Energie entzogen, d.h. er wird einer Entladebelastung unterzogen und gleichzeitig wird die dabei abgegebene elektrische Energie dem anderen Akkumulator zugeführt. Dieser wird also einer Ladebelastung unterzogen.

In einem nächsten Schritt kann in einem darauffolgenden Zeitraum eine Prüfung in umgekehrter Richtung erfolgen, d.h. der zweitgenannte Akkumulator wird entladen, und dabei die ihm entnommene Energie dem erstgenannten Akkumulator wieder zugeführt. Bis auf die durch die elektrische Beschaltung selbst verbrauchte Energie ist damit der Ausgangszustand beider Akkumulatoren wiederhergestellt, und es liegen Erkenntnisse über das Verhalten beider Akkumulatoren sowohl in Lade- wie in Entladerichtung vor.

Da bei einer Entladung eines Akkumulators die abgegebene Spannung unter der Ruhespannung des Akkumulators liegt und die zur Ladung eines Akkumulators erforderliche Spannung höher als seine Ruhespannung ist, muß im Falle der gegenseitigen aufeinander-folgenden Prüfung zweier gleichartiger Akkumulatoren mit gleicher Zellenzahl eine elektronische Schaltung in Form eines Spannungswandlers zwischengeschaltet werden.

Über einen Algorithmus kann aus dem Strom-/Spannungsverhalten der geprüften Einheiten auf deren Ladezustand, deren Betriebszustand, deren Speicherkapazität oder deren Verfügbarkeit geschlossen werden. Aus dem für die einzelnen Akkumulatoren abgeleiteten Status kann auch auf den Gesamtzustand der Gesamtheit der geprüften Akkumulatoren rückgeschlossen werden. Vorteilhaft kann es sein, die bei der Prüfung verwendete Belastung in Entlade- oder Laderichtung größer zu wählen als dies der Belastung im normalen Betrieb dieses Akkumulators entspricht. Die Prüfung erfolgt, während die zu prüfenden Akkumulatoreneinheiten den von ihnen versorgten oder gesicherten Verbraucher mit elektrischer Energie versorgen oder vorzugsweise, während die Akkumulatoreneinheiten von ihren Verbrauchern nicht belastet werden.

Die wechselseitige Prüfung der Akkumulatoren in der Art, daß ein Akkumulator zum Zwecke der Prüfung entladen und die dabei freigesetzte elektrische Energie dem anderen Akkumulator zum Zwecke der Ladung zugeführt wird, ermöglicht eine kontinuierliche und einwandfreie Überwachung des Betriebs- bzw. Ladezustands der Akkumulatoren. Dabei wird das Strom-/Spannungsverhalten der Akkumulatorenzellen sowohl bei Entladung als auch bei Ladung zur Beurteilung ihrer Verfügbarkeit herangezogen. Die Verwendung eines derarigen Verfahrens erfordert keine zusätzliche externe Energiequelle.

Durch Einsatz eines solchen Verfahrens entsteht ein autarkes System, das sich selbst prüft und bei dem sowohl in üblicher Weise das Entladeverhalten des Akkumulators und darüberhinaus auch das Ladeverhalten geprüft wird. Die bei der Entladeprüfung abgegebene Energie wird nicht einfach in Wärme umgesetzt, sondern sie wird zur Ladung eines anderen Akkumulators oder Akkumulatorenteiles verwertet. Nach der zyklischen Vertauschung der Rollen dieser beiden Akkumulatoren wird stets der alte Ladezustand nahezu erreicht, und es liegt eine auswertbare Information über den Zustand beider Akkumulatoren bzw. Akkumulatorenteile vor.

## Patentansprüche

1. Bleiakkumulator insbesondere Starterbatterie für Kraftfahrzeuge mit mehreren in einem gemeinsamen Blockkasten angeordneten elektrisch in Reihe geschalteten Einzelzellen, dadurch gekennzeichnet, daß der Blockkasten neun Einzelzellen enthält und daß die positiven und negativen Elektrodenplatten in den Einzelzellen ein Verhältnis von Höhe zu Breite von 0,3 bis 0,6 besitzen.

2. Bleiakkumulator nach Anspruch 1, dadurch gekennzeichnet, daß das Höhe / Breiteverhältnis der Elektrodenplatten zwischen 0,45 und 0,55 liegt.

3. Bleiakkumulator nach den Ansprüchen 1 und 2, dadurch gekennzeichnet, daß die Höhe der Elektrodenplatten zwischen 60 und 80 mm liegt.

4. Verwendung von zwei hintereinander geschalteten Akkumulatoren nach einem der Ansprüche 1 bis 3 als Starterbatterie in einem Kraftfahrzeug.
